# EUROPÄISCHE PATENTANMELDUNG

(11) **EP 2 811 622 A1**
(43) Veröffentlichungstag der Anmeldung: **10.12.2014**
(21) Anmeldenummer: 13170740.8
(22) Anmeldetag: 06.06.2013
(51) Int. Cl.: H02K 3/24, H02K 3/12

(54) **Verbesserte Kühlung eines Rotorwickelkopfes einer Turbomaschine**

(71) Anmelder: Siemens Aktiengesellschaft, 80333 München (DE)
(72) Erfinder: Kowalski, Waldemar, 45472 Mülheim an der Ruhr (DE); Lehmann, Christoph, Dr., 47506 Neukirchen-Vluyn (DE)

(57) **Zusammenfassung**

Die Erfindung betrifft einen Wickelkopf (1) für eine dynamoelektrische Maschine, wobei der Wickelkopf (1) Leiter umfasst, die einen Leiterverlauf zunächst in axialer Richtung (11) und dann in tangentialer Richtung (12) aufweisen, wobei in dem Leiter Kühlkanäle (13) angeordnet werden, die quer zum Leiterverlauf zeigen, wobei die Kühlkanäle (13) im Wesentlichen tangential zur Rotoroberfläche ausgerichtet sind.

## Beschreibung

Die Erfindung betrifft einen Wickelkopf für eine dynamoelektrische Maschine, wobei der Wickelkopf Leiter umfasst und im Leiter Kühlkanäle zum Kühlen des Leiters angeordnet sind.

Des Weiteren betrifft die Erfindung ein Verfahren zum Kühlen eines Wickelkopfes einer dynamoelektrischen Maschine. Dynamoelektrische Maschinen wie z.B. elektrische Generatoren werden unter anderem zur kommunalen Energieversorgung eingesetzt. Im Wesentlichen umfasst eine dynamoelektrische Maschine einen mit einer Leiterwicklung ausgebildeten Rotor und einen um den Rotor mit einer Ständerwicklung ausgebildeten Ständer.

Im Betrieb strömt ein elektrischer Strom mit einer vergleichsweise hohen elektrischen Stromstärke durch die Rotorwicklung und erzeugt dadurch ein Magnetfeld, das sich in Folge einer Rotation um eine Rotationsachse innerhalb der Ständerwicklung bewegt, was zu einer induzierten Spannung in der Ständerwicklung führt. Die hohen elektrischen Ströme in der Rotorwicklung führen zu einer Erwärmung. Die Erwärmung ist hierbei so hoch, dass geeignete Kühlungsmethoden eingesetzt werden müssen, damit keine Schäden in der Rotorwicklung bzw. in der Ständerwicklung auftreten.

Es ist bekannt, dass mit einer Erhöhung der Leistung die Temperatur ansteigt. Im Wesentlichen begrenzt die entstehende Temperatur die Erhöhung der Leistung großer dynamoelektrischer Maschinen. Der Temperaturanstieg ist abhängig von der abgeführten schädlichen Wärme. Dabei ist oftmals ein einzelnes Bauteil oder ein Bestandteil der dynamoelektrischen Maschine maßgebend, das einen zulässigen Grenzwert aufweist und dadurch einem weiteren Temperaturanstieg entgegensteht.

Es ist bekannt, dass wenn bei einer dynamoelektrischen Maschine Luft als Kühlmedium durchgeblasen wird, zwar die Außenfläche der Kerne kühlt, jedoch die Kühlung der innenliegenden Teile z.B. der Leiter selbst unzureichend ist.

Dazu sind verschiedene Kühlanordnungen entstanden, um das Kühlungsmedium auch in die weiter innenliegenden Bauteile zu kühlen. So ist es bekannt, dass die Leiter innerhalb der Nut an den Längsseiten der Nut angeordnet werden, so dass ein freier Zwischenraum zwischen den Leitern entsteht. Dadurch kann ein Kühlgasstrom in direkter Berührung mit der Oberfläche der Leiter fließen. Allerdings ist diese Lösung vergleichsweise kompliziert, wobei besondere Vorkehrungen getroffen werden müssen, um die starken Beschleunigungskräfte, die im Leiter ansetzen, zu sichern. Darüber hinaus steht der Kühlstrom nur mit einer relativ kleinen Fläche der Leiter in Verbindung.

Es ist Aufgabe der Erfindung, eine weitere verbesserte Kühlmöglichkeit des Wickelkopfes einer dynamoelektrischen Maschine anzugeben.

Gelöst wird diese Aufgabe durch einen Wickelkopf für eine Maschine, wobei der Wickelkopf Leiter umfasst, wobei im Leiter Kühlkanäle zum Kühlen des Leiters angeordnet sind, wobei die Kühlkanäle quer zum Leiterverlauf angeordnet sind.

Üblicherweise werden die Leiter in so genannten Nuten angeordnet, wobei die Nuten in einer radialen Richtung, bezogen auf eine Rotationsachse, ausgebildet sind. Die im Stand der Technik bekannten Kühlkanäle umfassen hierbei Strömungsrichtungen des Kühlmediums, das von der Rotationachse in radialer Richtung zeigt. Das bedeutet, dass die Leiter in einer radialen Richtung mit Kühlkanälen versehen sind.

Mit der Erfindung wird nun vorgeschlagen, einen weiteren Parameter einzufügen, bei dem weitere Kühlkanäle zum Kühlen des Leiters angeordnet werden, die allerdings quer zum Leiterverlauf angeordnet sind. Das bedeutet, dass die Leiter im Wickelkopf, die entlang der Rotorfläche angeordnet sind, und somit einen Kreisbogen darstellen, im Wesentlichen tangential zur Rotoroberfläche ausgerichtet sind. Die erfindungsgemäßen Kühlkanäle werden nunmehr nicht radial zur Rotationsrichtung ausgerichtet, sondern werden parallel zur Rotoroberfläche angeordnet. Das bedeutet, dass die Leiter quer zu ihrem Leiterverlauf ausgebildet werden.

Vorteilhafte Weiterbildungen sind in den Unteransprüchen angegeben.

So weist in einer ersten vorteilhaften Weiterbildung der Wickelkopf mehrere die Leiter aufweisende Spulen auf, wobei eine erste Spule aus einer äußersten Spule ausgebildet ist und eine zweite Spule zur ersten Spule benachbart angeordnet ist, wobei eine letzte Spule zur zweiten Spule benachbart angeordnet ist.

Ein Wickelkopf umfasst mehrere Leiterbahnen, deren Richtungen im Wickelkopf geändert werden. Die Rotorwicklung an sich weist Leiter auf, die in Umfangsrichtung parallel zueinander angeordnet sind. Im Wickelkopf wird die parallele Anordnung der Rotorwicklung um im Wesentlichen 90° gedreht, so dass der Leiterverlauf von einer ursprünglich axialen Richtung in eine tangentiale Richtung umgewandelt wird. Da die Rotorwicklung aus mehreren Leitern besteht, ist eine erste Spule als äußerste Spule am Wickelkopf angeordnet, wobei eine zweite Spule zur ersten Spule benachbart ausgebildet ist, so dass ein Zwischenraum zwischen der ersten Spule und der zweiten Spule entsteht. Nach der zweiten Spule können noch weitere Spulen angeordnet werden. Letztlich ist eine letzte Spule angeordnet, die ebenfalls gekühlt werden muss.

Die erfindungsgemäßen Kühlkanäle werden nun derart angeordnet, dass eine tangentiale Bohrung eine strömungstechnische Verbindung zwischen einem Kühleinlass und einem Zwischenraum ermöglicht, wobei dieser Zwischenraum zwischen der ersten Spule und der zweiten Spule angeordnet ist. Von diesem Zwischenraum gelangt das Kühlungsmedium über Kühlkanäle in der zweiten Spule zu einem nächsten Zwischenraum, der zwischen der zweiten Spule und der dritten Spule angeordnet ist. Dadurch entsteht eine strömungstechnische Verbindung zwischen dem ersten Zwischenraum und dem zweiten Zwischenraum. Das Kühlungsmedium kann wiederum durch Kühlkanäle in der dritten Spule in einen dritten Zwischenraum gelangen und von dort schließlich über weitere Spulen zur letzten Spule und nach der letzten Spule in einen letzten Zwischenraum gelangen und von dort kann das Kühlmedium durch Kanäle unterhalb der Kappe oder durch Bohrungen im Pol in axialer und anschließend in radialer Richtung in den Luftspalt austreten.

Die Kühlkanäle können hierbei in äquidistanten Abständen zueinander ausgebildet werden. Dies ermöglicht eine gleichmä-βige Kühlung des Wickelkopfes.

Erfindungsgemäß kann das Kühlmedium Luft, Wasserstoff oder ein anderes Kühlgas sein.

Des Weiteren wird die Aufgabe gelöst durch ein Verfahren zum Kühlen eines Wickelkopfes einer elektrodynamischen Maschine, wobei durch quer zum Leiterverlauf angeordnete Kühlkanäle ein Kühlmedium durch den Leiter strömt.

Im Folgenden wird die Erfindung anhand eines Ausführungsbeispiels näher erläutert.

Darin zeigen:
- Figur 1: eine perspektivische Ansicht eines Teils eines Wickelkopfes;
- Figur 2: eine Draufsicht von oben auf den Wickelkopf;
- Figur 3: eine Seitenansicht des erfindungsgemäßen Leiters eines Wickelkopfes.

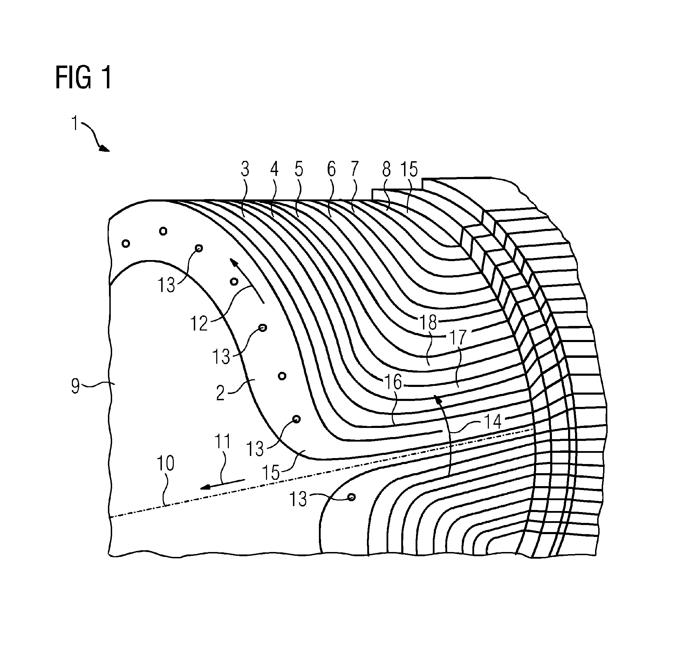

Figur 1 zeigt einen Wickelkopf 1 in einer perspektivischen Ansicht. Der Wickelkopf 1 umfasst hierbei verschiedene Leiter. Insbesondere weist der in Figur 1 dargestellte Wickelkopf mehrere die Leiter aufweisende Spulen auf, wobei eine erste Spule 2 als äußerste Spule angeordnet ist und eine zweite Spule 3 zur ersten Spule benachbart angeordnet ist. In der Figur 1 ist zur zweiten Spule 3 benachbart angeordnet eine dritte Spule 4 und zur dritten Spule 4 ist eine vierte Spule 5 sowie zur vierten Spule 5 eine weitere fünfte Spule 6 und dazu eine benachbart angeordnete sechste Spule 7 angeordnet. Zur sechsten Spule 7 ist eine letzte Spule 8 angeordnet, wie es in Figur 1 gezeigt ist.

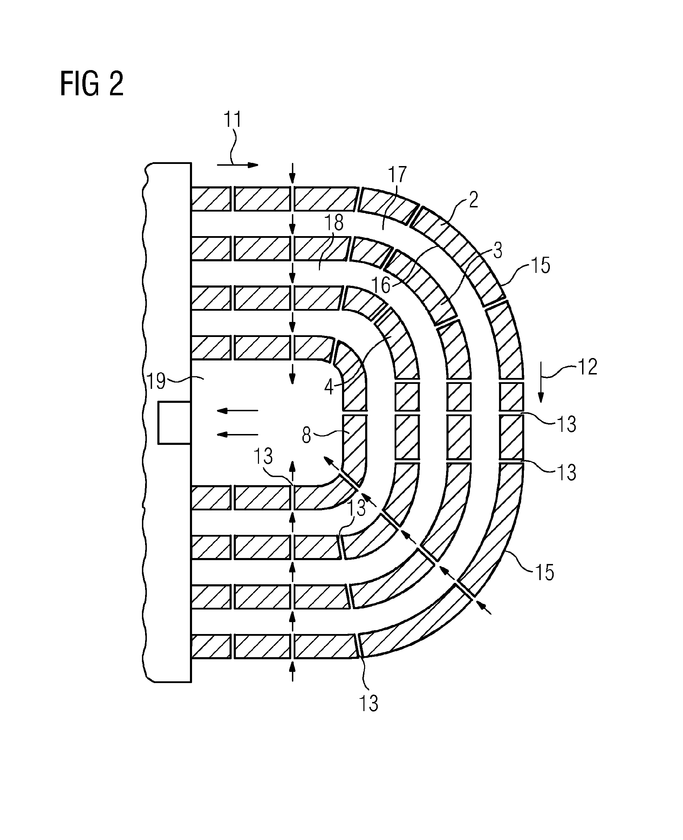

Die Figur 2 zeigt eine Draufsicht auf den Wickelkopf 1 aus Figur 1. Aus Gründen der Übersichtlichkeit sind die vierte Spule 5, fünfte Spule 6 und sechste Spule 7 ausgelassen. Aus Gründen der Konsistenz wurde die letzte Spule in der Figur 2 mit dem Bezugszeichen 8 versehen.

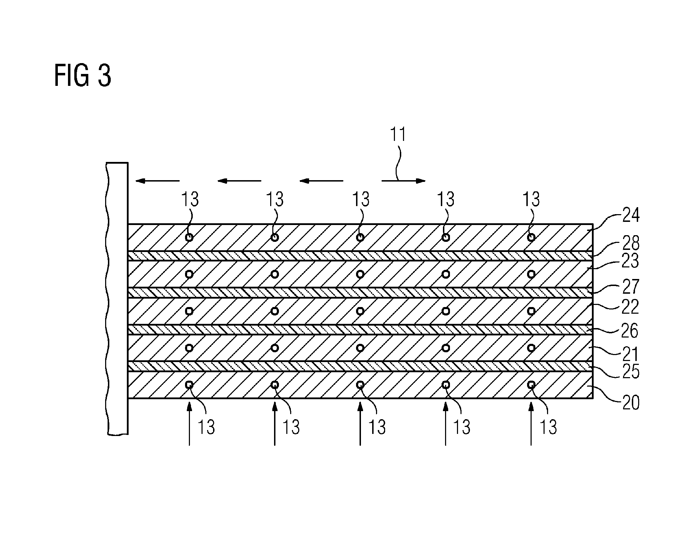

Die Figur 3 zeigt eine seitliche Ansicht der ersten Spule 2.

Der Wickelkopf 1 ist auf einem Rotor 9 angeordnet, der um eine Rotationsachse 10 rotationssymmetrisch ausgebildet ist. Die erste Spule 2 ist zunächst in einer axialen Richtung 11 ausgebildet, die im Wesentlichen zur Rotationsachse 10 parallel angeordnet ist. Danach wird durch eine Biegung die Richtung der ersten Spule 2 um 90° geändert, so dass der Leiterverlauf der ersten Spule 2 entlang der Rotoroberfläche geführt wird, und somit im Wesentlichen in einer tangentialen Richtung 12 zur Rotoroberfläche ausgerichtet ist. Im Wesentlichen sind die erste Spule 2, zweite Spule 3, dritte Spule 4, vierte Spule 5, fünfte Spule 6, sechste Spule 7 und letzte Spule 8 im Wesentlichen gleich aufgebaut, so dass nach der zunächst axialen Richtung 11 der Leiterverlauf in eine tangentiale Richtung 12 geändert wird.

Kühlkanäle 13 sind in der ersten Spule 2 derart angeordnet, dass sie quer zum Leiterverlauf ausgerichtet sind. Aus Gründen der Übersichtlichkeit sind lediglich vier Kühlkanäle mit dem Bezugszeichen 13 in der Figur 1 versehen. Durch die Anordnung der Leiter zeigt die Richtung der Kühlkanäle 13 in der axialen Richtung 11 in Umfangsrichtung, was durch den Pfeil 14 dargestellt ist. Nach der Biegung 15 zeigt die Richtung der Kühlkanäle 13 in die axiale Richtung 11.

In Betrieb strömt somit ein Strömungsmedium von außen nach innen quer durch die Leiter im Wickelkopf 1. Dabei tritt das unterhalb des Wickelkopfes 1 angesaugte Kühlgas zunächst in die Kühlkanäle 13 der äußersten Spule 8 ein. Nach der Innenseite 15 tritt das Kühlgas in einen ersten Zwischenraum 17 und von dort über Kühlkanäle 13 in der zweiten Spule 3 in einen zweiten Zwischenraum 18.

Dies wiederholt sich in ähnlicher Weise durch die dritte Spule 4, vierte Spule 5, fünfte Spule 6 und sechste Spule 7, bis das Kühlgas auch durch Kühlkanäle 13 in der letzten Spule 8 strömt. Nach Austritt des Kühlgases aus den Kühlkanälen 13 der letzten Spule kann das Kühlgas dann durch Kanäle unterhalb der Kappe oder durch Bohrungen im Pol in axialer und anschließend in radialer Richtung in den Luftspalt austreten. Dieses Prinzip kann sowohl für gebogene Leiter im Wickelkopf 1 als auch für eckengelötete Leiter im Wickelkopf 1 eingesetzt werden.

Nachdem das Kühlmedium im letzten Zwischenraum 19 gesammelt wurde, kann es dann in den Luftspalt zwischen Ständerwicklung und Rotorwicklung weiter strömen.

Die Figur 3 zeigt die erste Spule 2 in einer seitlichen Darstellung. Der Leiter umfasst hierbei mehrere Teilleiter 20, 21, 22, 23, 24, die durch elektrische Isolation in 25, 26, 27, 28 voneinander elektrisch isoliert sind. Die Kühlkanäle 13 sind als Bohrungen in äquidistanten Abständen zueinander in jedem Teilleiter 20 bis 24 ausgeführt.

Aus Gründen der Übersichtlichkeit sind in der Figur 3 nicht alle Kühlkanäle mit dem Bezugszeichen 13 versehen.

Durch die erfindungsgemäße Verbesserung des Wickelkopfes 1 ist eine verbesserte Kühlung möglich. Dadurch wird einer Begrenzung der Generatorleistung durch hohe Temperaturen im Läuferwickelkopf entgegengewirkt. Des Weiteren ist kein verbreiterter Querleiter mit erhöhtem Kupferquerschnitt zur Senkung der Leitertemperatur mehr erforderlich. Dadurch kann der Läufer kürzer gebaut werden, was zu einer Kostenersparnis führt.

## Patentansprüche

1. Wickelkopf (1) für eine elektrodynamische Maschine, wobei der Wickelkopf (1) Leiter umfasst,
wobei im Leiter Kühlkanäle (13) zum Kühlen des Leiters angeordnet sind,
**dadurch gekennzeichnet, dass**
die Kühlkanäle (13) quer zum Leiterverlauf angeordnet sind.

2. Wickelkopf (1) nach Anspruch 1,
wobei der Wickelkopf (1) mehrere die Leiter aufweisende Spulen umfasst,
wobei eine erste Spule (2) als äußerste Spule angeordnet ist und
eine zweite Spule (3) zur ersten Spule (2) benachbart angeordnet ist,
wobei eine letzte Spule (8) zur zweiten Spule (3) benachbart angeordnet ist.

3. Wickelkopf (1) nach Anspruch 2,
wobei die Kühlkanäle (13) derart angeordnet sind, dass zwischen den Kühlkanälen (13) der ersten Spule (2), der zweiten Spule (3) und der letzten Spule (8) eine strömungstechnische Verbindung besteht.

4. Wickelkopf (1) nach einem der vorhergehenden Ansprüche,
wobei die Kühlkanäle (13) in äquidistanten Abständen zueinander ausgebildet sind.

5. Wickelkopf (1) nach einem der vorhergehenden Ansprüche,
wobei im Betrieb der elektrodynamischen Maschine ein Kühlmedium durch die Kühlkanäle (13) strömt.

6. Verfahren zum Kühlen eines Wickelkopfes (1) einer dynamoelektrischen Maschine,
wobei durch quer zum Leiterverlauf angeordnete Kühlkanäle (13) ein Kühlmedium durch den Leiter strömt.

7. Verfahren nach Anspruch 6,
wobei das Kühlmedium zunächst durch Kühlkanäle (13) eines ersten äußeren Leiters (2) strömt und anschließend durch einen zweiten Leiter (3) strömt, der zum ersten Leiter (2) benachbart angeordnet ist.

8. Verfahren nach Anspruch 7,
wobei das Kühlmedium nach einem letzten (8) zum zweiten Leiter (3) benachbarten Leiter in einer radialen Richtung in einen Luftspalt strömt.

9. Verfahren nach Anspruch 6, 7 oder 8,
wobei als Strömungsmedium Wasserstoff oder Luft verwendet wird.

10. Verfahren nach einem der Ansprüche 6 bis 9,
wobei der Wickelkopf (1) mit gebogenen oder mit eckengelöteten Leitern ausgebildet wird.
